# EUROPÄISCHE PATENTSCHRIFT

(11) **EP 2 078 459 B1**
(45) Veröffentlichungstag und Bekanntmachung des Hinweises auf die Patenterteilung: **14.12.2011**
(21) Anmeldenummer: 08171457.8
(22) Anmeldetag: 12.12.2008
(51) Int. Cl.: A23G 7/02, A23G 3/20, A23G 7/00

(54) **Verfahren zum Betreiben eines Temperierkanals für Süßwarenstücke sowie Temperierkanal**
Method for operating a tempering tunnel for sweets and tempering tunnel
Procédé de fonctionnement d'un canal d'équilibrage des températures pour des produits de confiserie et canal d'équilibrage des températures

(30) Priorität: 22.12.2007 DE 102007062448
(43) Veröffentlichungstag der Anmeldung: 15.07.2009
(73) Patentinhaber: Sollich KG, 32105 Bad Salzuflen (DE)
(72) Erfinder: Bläsing, Rüdiger, 33613, Bielefeld (DE)
(74) Vertreter: Rehberg Hüppe + Partner

(56) Entgegenhaltungen:
- DE-A1- 4 040 429
- GB-A- 755 770
- GB-A- 974 824
- GB-A- 1 482 484

## Beschreibung

### TECHNISCHES GEBIET DER ERFINDUNG

Die Erfindung betrifft ein Verfahren zum Betreiben eines Temperierkanals für Süßwarenstücke und einen entsprechenden Temperierkanal.

Die Erfindung bezieht sich insbesondere auf einen einer Überziehmaschine für Schokolademasse mit Bodenwallstation nachgeschalteten Kühlkanal.

Die Erfindung lässt sich bei Massen anwenden, wie sie bei der Herstellung und/oder Bearbeitung von Süßwarenstücken eingesetzt werden. Es kommen insbesondere fetthaltige Massen, insbesondere Schokolademassen, in Frage, bei deren Erstarrung auf dem Süßwarenstück es darauf ankommt, die Kristallbildungsvorgänge, insbesondere am Boden des Süßwarenstücks, gezielt zu beeinflussen. Die Erfindung kann aber auch auf zuckerhaltige Massen, wie z. B. Karamell, Hartzucker, Glasuren, oder auch auf Massen, die sowohl Fett als auch Zucker enthalten, angewendet werden.

### STAND DER TECHNIK

Temperierkanäle in Form von Kühlkanälen für Süßwarenstücke sind aus der deutschen Patentanmeldung DE 196 07 055 A1 und dem europäischen Patent EP 1 046 343 B1 bekannt. Ein solcher Temperierkanal weist in einem Abschnitt einen Temperiertunnel auf. Er kann, falls sich der Temperiertunnel nur in einem Mittelbereich erstreckt, auch noch eine Einlaufzone und eine Auslaufzone besitzen, die also von dem Temperiertunnel freigehalten sind. Es wird ein endloses angetriebenes Transportband durch den Temperiertunnel geführt. Die zu temperierenden Süßwarenstücke liegen auf dem Transportband auf und werden so über die Länge des Temperierkanals und durch den Temperiertunnel geführt. Der Temperiertunnel ist mit einer Temperiervorrichtung ausgestattet, mit der die auf dem Transportband aufliegenden Süßwarenstücke temperiert, also zeitweise entweder gekühlt oder erwärmt werden. Die Ausbildung und Einwirkung dieser Temperiervorrichtung kann auch zonenweise unterteilt ausgebildet sein. Sie ist in allen Fällen darauf gerichtet, die Temperatur der Süßwarenstücke zu beeinflussen. Das Rücktrumm wird je nach Ausbildung des Temperierkanals bzw. des Temperiertunnels entweder im Temperiertunnel oder unterhalb und damit außerhalb des Temperiertunnels zurückgeführt. Diese bekannten Temperierkanäle, insbesondere in der Ausbildung als Kühlkanäle, sind so konstruiert, dass die Temperiervorrichtung im Temperiertunnel auf die Süßwarenstücke, also auf die Produkte einwirkt, damit beispielsweise die Produkte entsprechend gekühlt oder gezielt einem Temperierprofil auf ihrem Weg entlang der Länge des Temperiertunnels ausgesetzt werden. Dies reicht in vielen Fällen aus, um ein gewünschtes Arbeitsergebnis an dem Süßwarenstück zu erzielen.

Es gibt weiterhin im Stand der Technik **Kühlkanäle,** bei denen die Kühlvorrichtung im Kühltunnel temperaturmäßig präzise gesteuert wird. Dies geschieht im Sinne einer Optimierung der Kristallisation von Bestandteilen der Süßwarenstücke. Die Kristallisation, z. B. bei Schokolademasse, beginnt bekanntlich bereits in der Temperiermaschine und wird letztendlich am Süßwarenstück im Kühltunnel ganz oder weitgehend beendet.

**Bei Tafelgießanlagen** des Stands der Technik ist es bekannt, Temperierkanäle einzusetzen, bei denen das Transportband als Stahlband ausgebildet ist und Gießformen aus Kunststoff trägt, in denen die Schokoladetafeln gebildet werden. Das Ende des Transportbands im oberen Trumm stromabwärts des Temperiertunnels wird durch das Anspritzen mit Kühlwasser von unten gekühlt. Diese Kühlung ist ausschließlich und unmittelbar auf die Kühlung der Schokoladetafein abgestimmt, um das Lösen der Schokoladetafeln aus den Gießformen beim Ausschlagen zu vereinfachen, nachdem diese bereits den Temperiertunnel verlassen haben.

Auch bei **Temperierkanälen** des Stands der Technik, die als Backöfen für Süßwarenprodukte ausgebildet sind, gibt es am Ende des Temperierkanals eine Kühleinrichtung, die auf eine wirksame Kühlung der Backwaren abgestimmt ist.

Weiterhin ist im Stand der Technik ein Kühltunnel bekannt, bei dem ein energiesparender Betrieb angestrebt wird, wobei das Rücktrumm des Transportbands durch den Kühltunnel geführt wird, um das Band während des gesamten Zyklus auf einer unbestimmten niedrigen Temperatur zu halten. Diese unbestimmte niedrige Temperatur ist aber für verschiedene Produkte schädlich und stellt nicht eine optimale Temperatur dar, wie sie beispielsweise für die Fortsetzung einer Kristallisation einer Schokolademasse an einem Produkt sinnvoll wäre.

Aus der deutschen Patentanmeldung DE 40 40 429 A1 ist ein Kühltunnel für Süß- und Dauerbackwaren bekannt, bei dem das Rücktrumm des Transportbands durch den Kühltunnel zurückgeführt wird. Der Kühlkanal weist pro Sektion je einen Luftkühler auf. Die gekühlte Luft wird über die auf dem oberen Trumm geförderten Süßwarenstücke, das Bodenblech und das Rücktrumm des Transportbands geleitet. Es ist gewünscht, die Temperatur des Transportbands an der übergabestelle zwischen der Überziehmaschine und dem Kühlkanal auf einem wesentlich niedrigeren Wert zu halten, als es bei einer Rückführung außerhalb des Kühltunnels der Fall wäre. Da der Kühlkanal nur eine Kühleinrichtung, nämlich den Luftkühler, aufweist und dieser primär die Aufgabe hat, die Süßwarenstücke zu kühlen, ergibt sich bei der Kühlung des Rücktrumms eine sich zufällig einstellende Temperatur, nämlich ein wesentlich niedrigerer Wert. Diese Temperatur des Rücktrumms des Transportbands im Kühlkanal verändert sich je nach Länge der Einlaufzone. Sie ist für verschiedene Produkte schädlich, insbesondere niedriger als die Temperatur, die für eine Fortsetzung einer Kristallisation einer Schokolademasse an einem aus der Überziehmaschine austretenden Produkt sinnvoll wäre.

Die britische Patentanmeldung GB 755,770 zeigt einen Temperierkanal für Süßwarenstücke und ein Verfahren zum Betreiben eines solchen Temperierkanals, bei dem das Rücktrumm des Transportbands mittels einer Heizeinrichtung beheizt wird.

Die Britische Patentanmeldung GB 1 482 484 zeigt einen Temperierkanal für Süßwarenstücke, und ein Verfahren zum Betreiben eines solchen Temperierkanals, bei dem das Rücktrumm des Transportbands mittels einer Kühleinrichtung gekühlt wird.

Britische Patentanmeldung GB 974,824 zeigt einen Temperierkanal für Süßwarenstücke und ein Verfahren zum Betreiben eines solchen Temperierkanals, bei dem das Transportband an einer nicht näher bezeichneten Stelle unkontrolliert erwärmt oder gekühlt wird.

### AUFGABE DER ERFINDUNG

Der Erfindung liegt die Aufgabe zugrunde, ein Verfahren zum Betreiben eines Temperierkanals für Süßwarenstücke unter Verwendung eines endlosen Transportbands aufzuzeigen und einen entsprechenden Temperierkanal bereitzustellen, mit denen die Temperaturbeeinflussung der Süßwarenstücke, und insbesondere deren Bodens, verbessert ist.

### LÖSUNG

Die Aufgabe der Erfindung wird erfindungsgemäß mit den Merkmalen der unabhängigen Patentansprüche 1 bzw. 9 gelöst.

### BESCHREIBUNG DER ERFINDUNG

Da es bei der Temperierung von Süßwarenstücken in erster Linie auf die Temperaturveränderung an und in diesen Süßwarenstücken ankommt, waren Temperierkanäle bisher nur daraufhin ausgelegt und dimensioniert. Die Temperatur des Transportbands, die dieses beim Durchlauf durch den Temperiertunnel erfährt, stellt sich mehr oder weniger zufällig ein. Jedenfalls ist die Bedeutung der Temperatur des Transportbands nach Erkenntnissen der Anmelderin bisher im Stand der Technik immer unbeachtet geblieben. Dies gilt vor allem für die Übernahmestelle und den sich anschließenden Bereich bis zum Beginn des Temperiertunnels.

Bei dem neuen Temperierkanal und dem Verfahren zum Betreiben des Temperierkanals für Süßwarenstücke wird bereits der Teil des Transportbands, der sich in Bandlaufrichtung an die Übernahmestelle des Temperierkanals anschließt, im Sinne einer zweckmäßigen Temperaturbeeinflussung der Süßwarenstücke - und insbesondere des Bodens der Produkte - genutzt. Dabei ist es möglich, eine Vielzahl von Einflussfaktoren so auszuschalten, dass je nach der Art der Süßwarenstücke für deren Temperierung nicht nur der Temperiertunnel, sondern auch bereits die nach der Übernahmestelle beginnende Einlaufzone, sinnvoll genutzt werden kann.

Das Rücktrumm des Transportbands wird so geheizt und/oder gekühlt, dass das Transportband an der Übernahmestelle eine bestimmte Temperatur erhält. Diese Temperatur weicht von der Temperatur ab, die das Transportband zufällig bei der Temperierung der Süßwarenstücke auf dem oberen Trumm erhält. Die Temperatur ist eine auf die Temperierung der Süßwarenstücke abgestimmte optimale Temperatur. Indem das Transportband eine bestimmte, in der Regel dann konstant zu fahrende Temperatur erhält, wirkt sich diese Temperatur ab dem ersten Kontakt der ankommenden Süßwarenstücke mit dem Transportband an der Übernahmestelle sofort in dem gewünschten Sinne aus. Wenn beispielsweise eine Überziehmaschine einem Temperierkanal vorgeschaltet ist, mit der Süßwarenstücke mit einer Schokolademasse überzogen werden, wird die Kristallisierung der Schokolademasse nicht nur der vorgeschalteten Überziehmaschine und dem nachgeschalteten Kühltunnel überlassen, sondern der Bereich des Kühlkanals zwischen der Übernahmestelle und dem Kühltunnel wird in diesen Kristallisationsverlauf einbezogen.

Um welche jeweils konstant eingestellte Temperatur des Transportbands es sich handelt, hängt von vielen Faktoren ab, beispielsweise von der Art des Süßwarenstücks, der verwendeten Überzugsmasse, der Effektivität des Kühltunnels, der Beladung bzw. Belastung des Transportbands, usw. Es versteht sich, dass diese konstant einzustellende optimale Temperatur sich auf einen eingeschwungenen Dauerbetrieb bezieht. Bei Produktionsunterbrechungen kann die eingestellte Temperatur auch gezielt variiert bzw. an einen gewünschten Temperaturverlauf angepasst werden, um so schneller den eingeschwungenen Zustand wieder zu erreichen. Dabei kann auch ein Wechsel von Heizen und Kühlen auftreten, je nach dem, mit welcher mehr oder weniger zufälligen Temperatur das Transportband den Kühltunnel verlässt. Das neue Heizen und/oder Kühlen ist im Gegensatz zum Stand der Technik nicht unmittelbar auf die Süßwarenstücke ausgerichtet, sondern auf das Transportband. Die optimale Temperatur des Transportbands an der Übernahmestelle soll letztlich jedoch auch der thermischen Behandlung der Süßwarenstücke zugute kommen.

Unter dem Begriff des Temperierkanals für Süßwarenstücke wird entweder ein Erwärmungskanal oder ein Kühlkanal für solche Süßwarenstücke verstanden. Entsprechend wird auch der Begriff Temperierung in der vorliegenden Anmeldung gebraucht. Die Temperierung kann dabei relativ zu der Art und Größe der Warenstücke in Betracht gezogen werden, auch relativ zu den Temperiervorrichtungen in einem Temperiertunnel.

Das neue Verfahren besitzt mehrere Vorteile. Es nutzt sinnvoll einen Bereich des Transportbands stromab der Übernahmestelle und der gegebenenfalls ausgeprägt ausgebildeten Einlaufzone, um die temperaturmäßige Beeinflussung der Süßwarenprodukte an dieser Stelle nicht zu unterbrechen oder nicht negativ zu beeinflussen. Auch dabei kann eine Abstimmung auf das Temperaturprofil der Temperiervorrichtung im Temperiertunnel erfolgen. Auf diese Weise kann beispielsweise der Temperiertunnel selbst entlastet werden. Dies kann sich sogar soweit vorteilhaft auswirken, dass die Verkürzung eines Temperierkanals und insbesondere eines Temperiertunnels im Einzelfall möglich wird. Mit der Heizung und/oder Kühlung des Rücktrumms des Transportbands werden die Differenzen der Temperatur des Transportbands beseitigt, die sich nach seinem Austreten aus dem Temperiertunnel mehr oder weniger zufällig ergeben. Das Verfahren ist unabhängig davon anwendbar, ob das Rücktrumm des Transportbands in dem Temperiertunnel oder unterhalb des Temperiertunnels, insbesondere in der den Temperiertunnel umschließenden Atmosphäre, rückgeführt wird.

Die Aufbringung der Temperatur auf das Transportband erfolgt durch eine Steuerung oder auch durch eine Regelung Im einfachsten Falle genügt eine Steuerung, die nach Erfahrungswerten einstellbar ist. Insoweit ist es noch nicht einmal erforderlich, die Temperatur des Transportbands kontinuierlich zu erfassen. Eine genauere Erreichung der optimalen Temperatur ist mit einem Regelkreis möglich. Hierbei empfiehlt es sich, die Temperatur des Transportbands im Bereich des Beginns des Rücktrumms und die Temperatur des Transportbands an der Übernahmestelle zu messen und die entstehenden Signale in einen Regelkreis einzubeziehen. Es ist auch für diesen Regelkreis erforderlich, die auf das betreffende Süßwarenprodukt abgestimmte optimale Temperatur einzustellen bzw. vorzuwählen.

Das neue Verfahren und der neue Temperierkanal ermöglichen die Herstellung qualitativ hochwertigerer Süßwarenstücke, insbesondere solcher mit Bodenüberzug. So werden z. B. Kristallisationsvorgänge, wie sie beginnend in der Temperiermaschine, dann über die nachgeschaltete Überziehmaschine bis hin in den Kühltunnel gezielt vorgenommen werden sollten, durch den Anfangsbereich des Kühlkanals außerhalb des Kühltunnels nicht unterbrochen oder negativ beeinflusst. Es kann vielmehr ein kontinuierlicher Verlauf dieser Kristallisation von z. B. Schokolademasse erreicht werden. Mit Hilfe der optimalen Temperatur an der Übernahmestelle, die das Transportband dort aufweist, und die sich bei dem ersten Kontakt mit den ankommenden Süßwarenstücken sofort auswirkt, wird eine Qualitätssteigerung im Kristallgefüge, verbunden mit allen weiteren Vorteilen, insbesondere Glanz, Grifffestigkeit, usw., erreicht. Auch wird z. B. eine Fettmigration durch den Bodenüberzug am Süßwarenstück verringert. Die optimal einzustellende konstante Temperatur an der Übernahmestelle ist natürlich von vielen Faktoren abhängig, so auch der Bandgeschwindigkeit, der Länge des Temperiertunnels und des Temperierkanals, der Temperatur im Temperiertunnel, der Produktbelegung, der Raumtemperatur, usw. Durch die an den jeweiligen Anwendungsfall angepasste optimale Temperatur wird vor allen Dingen eine falsche konstante Temperatur, wie sie aufgrund des Arbeitens des Temperiertunnels mehr oder weniger zufällig auftreten kann, vermieden. Für manche Produkte ist dies von großer Wichtigkeit.

Der neue Temperierkanal für Süßwarenstücke baut zunächst auf solchen Temperierkanälen auf, wie sie im Stand der Technik bekannt sind. Ein solcher Kanal besitzt in den meisten Fällen einen Tunnel, der durch eine Folge von Hauben gebildet wird und zumindest einen Großteil der Länge des Kanals einnimmt. Darüber hinaus kann eine Einlaufzone vorgesehen sein, an der sich kein Tunnelabschnitt befindet. Auf jeden Fall ist eine Übernahmestelle für die ankommenden Süßwarenstücke gebildet, die aus einer Umlenkwelle mit relativ kleinem Durchmesser oder sogar aus einer Messerkante gebildet sein kann. Dies dient dazu, auch relativ kleine Süßwarenstücke sicher von der vorgeschalteten Maschine auf das Transportband des Temperierkanals bringen zu können. Es versteht sich, dass der Temperiertunnel des Temperierkanals in bekannter Weise ausgebildet sein kann und in diesem Sinne eine erste Temperiervorrichtung aufweist, die die Aufgabe hat, die auf dem Transportband liegenden Süßwarenstücke direkt temperaturmäßig in der gewünschten Weise im Tunnel zu behandeln bzw. zu beaufschlagen. Eine dort günstig ablaufende Temperierung für die Süßwarenstücke muss aber nicht unbedingt auch positiv für die Temperatur sein, die das Transportband während des Durchlaufs annimmt. Diese Temperatur kann vielmehr dazu führen, dass sich an der Übernahmestelle eine ungünstige Temperatur für das betreffende Produkt einstellt. Der neue Temperierkanal sieht nun eine weitere Temperiereinrichtung vor, die auf das Rücktrumm des Transportbands einwirkend vorgesehen ist und angeordnet wird und mit der das Transportband ohne die Süßwarenstücke so geheizt und/oder gekühlt wird, dass das Transportband an der Übernahmestelle eine auf die Süßwarenstücke abgestimmte optimale Temperatur aufweist. Die optimale Temperatur kann darauf gerichtet sein, einen mehr oder weniger gewünschten konstanten Temperaturverlauf an dem betreffenden Süßwarenstück zwischen der vorgeschalteten Maschine und der Temperierung im Kühltunnel zu erreichen, also auf diesem gesamten Weg optimal und ununterbrochen zu arbeiten und nicht etwa kontraproduktiv. Auf diese Weise können auch Temperaturunterschiede, die das Transportband am Beginn des Rücktrumms aufweist, ausgeglichen werden.

Das Transportband besteht vorzugsweise vollständig aus Kunststoff oder weist wenigstens Bestandteile aus Kunststoff auf. Der Kunststoff kann in Form von Folien, aber auch von Kunststofffäden vorliegen, aus denen beispielsweise das Transportband gewebt ist. Auf diese Weise kann auch das Transportband eine strukturierte Oberfläche aufweisen, die sich am Boden des Süßwarenstücks abformt. Ein Qualitätsmerkmal beispielsweise mit einem Bodenwall überzogener Süßwarenstücke ist in einem geschlossenen Boden, möglichst ohne Luftblasen oder dergleichen, zu sehen. Auch diese vorteilhafte Wirkung lässt sich mit der Erfindung erreichen.

Es sind ein oder mehrere Sensoren für die Erfassung der Temperatur des Transportbands vorgesehen der oder die stromauf und/oder stromab der Temperiereinrichtung und vor der Übernahmestelle angeordnet sind. Ein solcher Sensor kann auch direkt an der Übernahmestelle angeordnet sein, da es darauf ankommt, die optimale Temperatur an dieser Stelle zu erreichen, an der der erste Kontakt eines ankommenden Süßwarenstücks mit der Oberfläche des Transportbands stattfindet.

Für die Ausbildung der Temperiereinrichtung, die die Oberfläche des Transportbands beeinflusst, gibt es verschiedene sinnvolle Realisierungsmöglichkeiten. In aller Regel wird die Temperiereinrichtung als gesonderte Einrichtung zu der Temperiervorrichtung des Temperiertunnels ausgebildet und angeordnet sein. Insoweit können die Temperiervorrichtung und die Temperiereinrichtung jeweils getrennt und unabhängig voneinander gesteuert werden.

Es ist aber auch möglich, dass die auf das Rücktrumm des Transportbands einwirkende Temperiereinrichtung und die auf die Süßwarenstücke im Temperiertunnel einwirkende Temperiervorrichtung als in bestimmter Weise eine gemeinsame oder zumindest zusammenhängende Einrichtung ausgebildet und angeordnet sind. Es sind dann aber mehrere Abschnitte vorgesehen, die wiederum getrennt gesteuert bzw. geregelt werden können. Insbesondere kann die auf das Rücktrumm des Transportbands einwirkende Temperiereinrichtung als tunnelartige Kammer ausgebildet sein, durch die das Rücktrumm des Transportbands hindurchgeführt ist.

Zur Übertragung und Beeinflussung der Temperatur des Transportbands kommen alle Arten von Temperaturübertragung in Frage, wie sie grundsätzlich auch im Bereich des Temperiertunnels anhand der dortigen Temperiervorrichtung eingesetzt werden, also insbesondere Kontakttemperierung, Konvektionstemperierung oder Strahlungstemperierung. Auch kombinierte Einrichtungen können selbstverständlich angewendet werden. Als besonders vorteilhaft hat es sich erwiesen, wenn die auf das Rücktrumm des Transportbands einwirkende Temperiereinrichtung ein Gebläse für temperierte Luft aufweist.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Ansprüche verändert wird, gilt hinsichtlich des Offenbarungs gehalts der ursprünglichen Anmel dungsunterlagen und des Patents Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren

Beschreibung genannt werden. Diese Merkmale können auch mit Merkmalen unterschiedlicher

Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist eine schematisierte Seitenansicht einer ersten beispielhaften Ausführungsform des erfindungsgemäßen Temperierkanals.
- **Fig. 2**: ist eine schematisierte Seitenansicht einer zweiten beispielhaften Ausführungs- form des erfindungsgemäßen Temperierkanals.
- **Fig. 3**: ist eine schematisierte Seitenansicht einer dritten beispielhaften Ausführungsform des erfindungsgemäßen Temperierkanals.
- **Fig. 4**: ist eine schematisierte Seitenansicht einer vierten beispielhaften Ausführungs- form des erfindungsgemäßen Temperierkanals.

### FIGURENBESCHREIBUNG

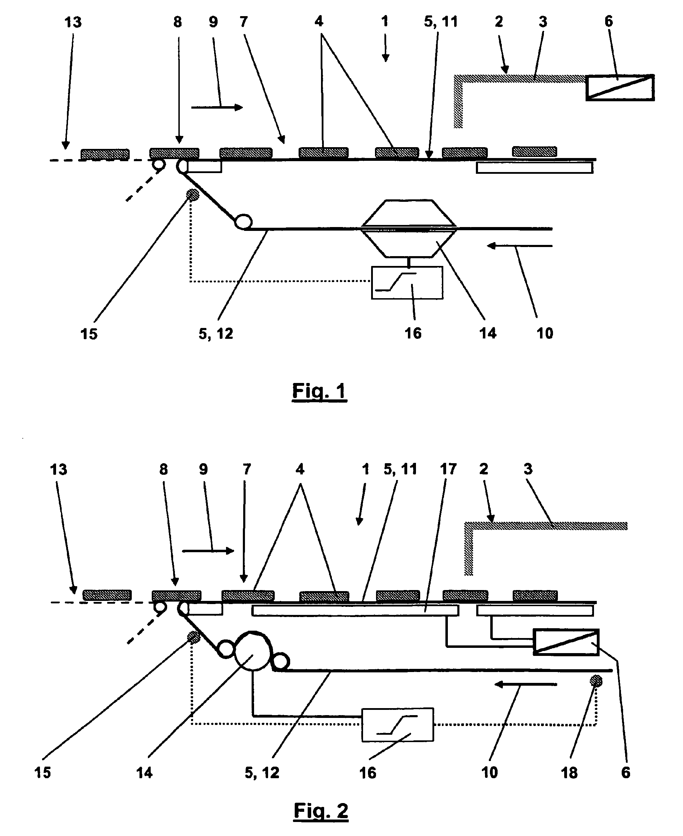

In Fig. 1 sind Elemente eines neuen Temperierkanals 1 dargestellt. Der Temperierkanal 1 weist einen Temperiertunnel 2 auf, der in der Regel eine Mehrzahl von Hauben 3 besitzt und so einen Temperiertunnel 2 bildet, durch den Süßwarenstücke 4 auf einem Transportband 5, insbesondere aus Kunststoff, aufliegend geführt und im Temperiertunnel 2 temperiert, also gekühlt und/oder erwärmt werden. Der Kühltunnel 2 besitzt eine Temperiervorrichtung 6, die wie im Stand der Technik bekannt ausgebildet ist und dazu dient, die Süßwarenstücke 4 innerhalb des Temperiertunnels 2 zu erwärmen und/oder zu kühlen. Z. B. kann die Temperiervorrichtung 6 mit Kontakttemperierung, Konvektionstemperierung und/oder Strahlungstemperierung arbeiten.

Der Temperierkanal 1 weist neben dem Temperiertunnel 2 eine Einlaufzone 7 auf, die sich von einer Übernahmestelle 8 bis zum Beginn des Temperiertunnels 2 erstreckt. Eine solche Einlaufzone 7 kann bei den verschiedenen Ausführungen der Temperierkanäle 1 unterschiedlich lang bemessen sein oder auch in Fortfall kommen. Ähnlich verhält es sich mit einer nicht dargestellten Auslaufzone, die am Ende des Kühltunnels 2 beginnt und sich bis zu einer Umlenkstelle des Transportbands 5 erstreckt, in welcher das Transportband 5 wieder rückgeführt wird. Z. B. kann diese Umlenkstelle durch eine Umlenkwalze mit relativ kleinem Durchmesser, aber auch in Form einer Messerkante o. ä. ausgebildet sein. Auch an der Übernahmestelle 8 ist eine solche Umlenkung des Transportbands 5 vorgesehen.

Das Transportband 5, welches als endloses Band ausgebildet ist und während der Produktion kontinuierlich gemäß den Pfeilen 9 und 10 umlaufend angetrieben wird, zerfällt in ein oberes Trumm 11 und ein unteres Trumm 12. Das obere Trumm 11 des Transportbands 5 wird auf jeden Fall durch den Temperiertunnel 2 geführt, während es für das Rückführen des unteren Trumms 12 des Transportbands 5 die Möglichkeit gibt, dies innerhalb des Temperierkanal 1 unterhalb des oberen Trumms 11 oder aber außerhalb des Temperierkanal 1, wie in Fig. 1 dargestellt, zu realisieren.

Stromauf des Temperierkanals 1 kann eine nur angedeutete Überziehmaschine 13 vorgesehen sein, die selbst wiederum ein endloses umlaufendes Gitterband aufweist und auf dem die Süßwarenstücke 4 nach ihrem Überzug auslaufen und so an der Übemahmestelle 8 in dem Temperierkanal 1 auflaufen bzw. übergeben werden. An der Stelle der Überziehmaschine 13 kann auch eine sonstige Behandlungseinrichtung oder -station vorgesehen sein, die auch unmittelbar nach einer Übernahmestelle 8 im Beginn der Einlaufzone 7 auf die Süßwarenstücke 4 einwirken kann, beispielsweise in Form einer Dosier- oder Dekoriereinheit (nicht dargestellt).

Es ist eine zweite Temperiereinrichtung 14 vorgesehen, die gemäß Fig. 1 als kastenartige Einrichtung ausgebildet sein kann, durch die das Rücktrumm 12 des Transportbands 5 hindurchgeführt wird, wobei die Temperiereinrichtung 14 eine gewünschte bzw. erforderliche Temperatur auf das Transportband 5 aufprägt. Mit einem im Bereich des Rücktrumms 12 kurz vor der Übemahmestelle 8 angeordneten Sensor 15, der als berührungslos arbeitender Temperatursensor ausgebildet sein kann, wird die Temperatur des Transportbands 5 kurz vor oder in der Übernahmestelle 8 erfasst. Der Sensor 15 ist mit einer Steuer- und/oder Regeleinrichtung 16 verbunden, die wiederum mit der Temperiereinrichtung 14 in Verbindung steht, so dass damit die Temperatur des Transportbands 5 an der Übernahmestelle 8 eingesteuert oder eingeregelt werden kann. Insoweit erhält das Transportband 5 an der Übernahmestelle 8 und in dem nachfolgenden Bereich der Einlaufzone 7 eine solche Temperatur, wie sie für die temperaturmäßige Behandlung der Süßwarenstücke 4 in der Einlaufzone 7 des Temperierkanals 1 günstig ist.

Während die Temperiervorrichtung 6 des Temperiertunnels 2 auf eine temperaturmäßige Beeinflussung der Süßwarenstücke 4 ausgerichtet und abgestimmt ist, sorgt die Temperiereinrichtung 14 dafür, dass das Transportband 5 an der Übernahmestelle 8 sowie nachfolgend eine definierte Temperatur, insbesondere eine sinnvolle, für die Temperierung der ankommenden Süßwarenstücke 4 optimale Temperatur, erhält.

Die Ausführungsform des Temperierkanals 1 gemäß **Fig. 2** baut in weiten Bereichen auf der Ausführungsform gemäß Fig. 1 auf, weshalb hierauf zunächst hingewiesen werden kann. Die Temperiervorrichtung 6 ist hier jedoch so ausgebildet und angeordnet, dass nicht nur die Süßwarenstücke 4 innerhalb des Temperiertunnels 1 temperiert werden. Es ist vielmehr eine Bodenplatte 17 im Bereich der Einlaufzone 7 vorgesehen, deren Temperatur ebenfalls von der Temperiervorrichtung 6 gesteuert wird. Die Temperiereinrichtung 14 ist hier walzenförmig ausgebildet, so dass Rücktrumm 12 des Transportbands 5 durch Kontakt mit der Oberfläche der Walze entsprechend temperiert wird. Neben dem Sensor 15 ist ein weiterer Sensor 18 vorgesehen, der die Temperatur des Transportbands 5 am Beginn des Rücktrumms 12 erfasst. Der Sensor 18 könnte auch oberhalb des oberen Trumms 11 am Ende oder im Bereich der Auslaufzone, also jedenfalls nach dem Temperiertunnel 2 angeordnet sein, um dort die Temperatur des Transportbands 5 zu erfassen und deren Einfluss in den Regelkreis mit einzubeziehen, wie dies auch hinsichtlich der Signale des Sensors 15 der Fall ist. Die Steuerund/oder Regeleinrichtung 16 arbeitet dann so, dass die Temperaturdifferenz, die das Transportband 5 im Temperiertunnel 2 mehr oder weniger zufällig erhalten hat, ausgeglichen wird, so dass sich an der Übernahmestelle 8 die gewünschte optimale und eingestellte Temperatur ergibt.

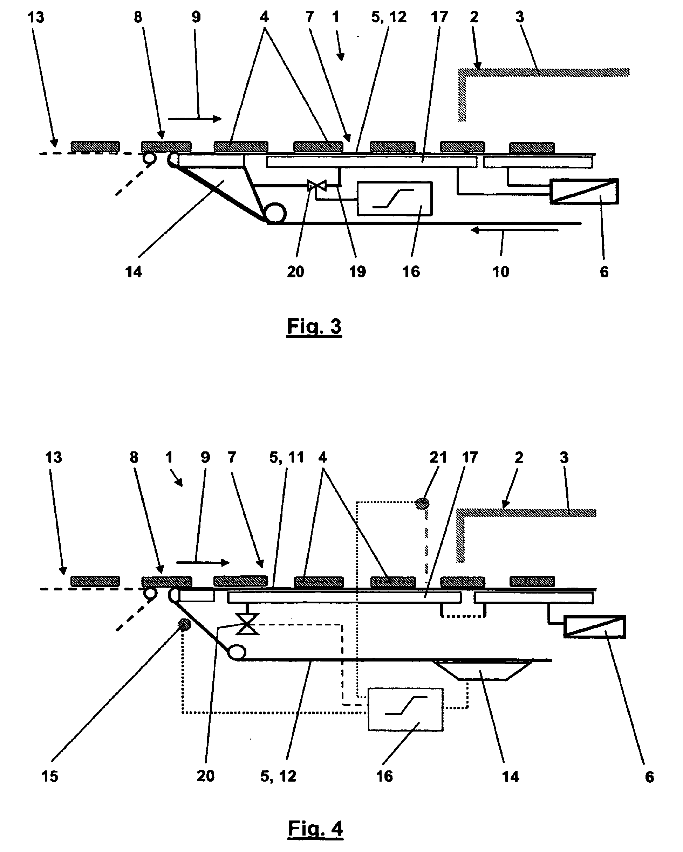

Auch der Temperierkanal 1 gemäß **Fig. 3** ist ähnlich aufgebaut wie die zuvor beschriebenen Ausführungsformen. Die Temperiervorrichtung 6 des Temperiertunnels 2 steuert hier auch die Temperatur einer Bodenplatte 17. An diese ist über eine Leitung 19 mit einem Ventil 20 die Temperiereinrichtung 14 angehängt. Es versteht sich, dass hier nur ein Teil des Kreislaufs, der beispielsweise mit Temperierwasser betrieben wird, dargestellt ist. Die Steuer- und/oder Regeleinrichtung 16 ist hier rein als Steuereinrichtung 16 ausgebildet. Es wird lediglich eine gewünschte optimale Temperatur an der Übernahmestelle 8 eingestellt und von Zeit zu Zeit beobachtet. In eingeschwungenem Zustand ergibt sich gemäß entsprechenden Erfahrungswerten, auch abgestimmt auf das jeweils hergestellte Produkt, eine einfache Steuerungsmöglichkeit.

Bei der Ausführungsform des Temperiertunnels 1 gemäß **Fig. 4** ist die Temperiereinrichtung 14 unterhalb des Rücktrumms 12 des Transportbands 5 angeordnet. Die Temperiereinrichtung 14 kann an die Temperiervorrichtung 6 des Temperiertunnels 2 angeschlossen sein. Neben dem Sensor 15 zur Erfassung der Temperatur des Transportbands 5 an der Übernahmestelle 8 kann ein weiterer Sensor 21 zur Erfassung der Temperatur des Transportbands 5 vor seinem Einlauf in den Temperiertunnel 2 vorgesehen sein, um zu überprüfen, wie das Transportband 5 von der Übernahmestelle 8 bis zum Beginn des Temperiertunnels 2 seine Temperatur verändert. Es kann sinnvoll sein, die Temperatur in einem optimalen Bereich einzustellen bzw. einzuregeln, der sich zwischen der Temperatur an der Umlenkstelle 8 und der Stelle des Transportbands 5 am Beginn des Temperiertunnels 2 ergibt. Es ist auch möglich, an dieser Stelle weitere, nicht dargestellte Sensoren anzuordnen und deren Signale ebenfalls in der Steuer- und Regeleinrichtung 16 mitzuverarbeiten, die nicht die Temperatur des Transportbands 5, sondern die Temperatur der Süßwarenstücke 4 am Einlauf in den Temperiertunnel 2 erfasst. Auch bei dieser Ausführungsform ist die Temperaturversorgung der Temperiereinrichtung 14 so ausgebildet und angeordnet, dass ein Wärmeteilkreislauf über das Ventil 20 von der Temperiervorrichtung 6 abgezweigt oder abgeleitet werden kann.

### BEZUGSZEICHENLISTE

- 1: Temperierkanal
- 2: Temperiertunnel
- 3: Haube
- 4: Süßwarenstück
- 5: Transportband
- 6: Temperiervorrichtung
- 7: Einlaufzone
- 8: Übernahmestelle
- 9: Pfeil
- 10: Pfeil
- 11: oberes Trumm
- 12: unteres Trumm
- 13: Überziehmaschine
- 14: Temperiereinrichtung
- 15: Sensor
- 16: Steuer- und/oder Regeleinrichtung
- 17: Bodenplatte
- 18: Sensor
- 19: Leitung
- 20: Ventil
- 21: Sensor

## Patentansprüche

1. Temperierkanal (1) für Süßwarenstücken (4), mit
einem Temperiertunnel (2);
einer ersten Temperiervorrichtung (6);
einem endlosen angetriebenen Transportband (5), auf dem die Süßwarenstücke (4) aufliegend in einer Bandlaufrichtung (9) durch den Temperiertunnel (2) geführt und dabei mit der ersten Temperiervorrichtung (6) temperiert werden; und
einer Übernahmestelle (8) am Transportband (5) für die ankommenden Süßwarenstücke (4); und
einer auf das Rücktrumm (12) des Transportbands (5) einwirkenden zweiten Temperiereinrichtung (14), **dadurch gekennzeichnet, dass**
mindestens ein Sensor (15, 18, 21) für die Erfassung der Temperatur des Transportbands (5) vorgesehen ist, der stromaufwärts oder stromabwärts der zweiten Temperiereinrichtung (14) und vor der Übernahmestelle (8) angeordnet ist; und
eine Steuer- und/oder Regeleinrichtung (16) vorgesehen ist, die mit dem mindestens einen Sensor (15) und der Temperiereinrichtung (14) so verbunden und derart ausgebildet ist, dass die Temperatur des Transportbands (5) an der Übernahmestelle (8) so gesteuert oder geregelt wird, dass das Transportband (5) so geheizt und/oder gekühlt wird, dass das Transportband (5) an der Übernahmestelle (8) eine auf die temperaturmäßige Beeinflussung der Süßwarenstücke (4) abgestimmte bestimmte Temperatur aufweist.

2. Temperierkanal (1) nach Anspruch 1, **dadurch gekennzeichnet, dass** die zweite Temperiereinrichtung (14) unmittelbar auf das Rücktrumm (12) des Transportbands (5) einwirkend angeordnet ist.

3. Temperierkanal (1) nach Anspruch 1 oder 2, **dadurch gekennzeichnet, dass** eine Mehrzahl von Sensoren (15, 18, 21) für die Erfassung der Temperatur des Transportbands (5) vorgesehen ist, die stromaufwärts und/oder stromabwärts der zweiten Temperiereinrichtung (14) und vor der Übernahmestelle (8) angeordnet sind.

4. Temperierkanal (1) nach mindestens einem der Ansprüche 1 bis 3, **dadurch gekennzeichnet, dass** die zweite Temperiereinrichtung (14) und die auf die Süßwarenstücke (4) im Temperiertunnel (2) einwirkende erste Temperiervorrichtung (6) in dem Sinne teilweise als eine gemeinsame Einrichtung ausgebildet und angeordnet sind, dass die zweite Temperiereinrichtung (14) an die erste Temperiervorrichtung (6) angeschlossen ist.

5. Temperierkanal (1) nach mindestens einem der Ansprüche 1 bis 4, **dadurch gekennzeichnet, dass** die zweite Temperiereinrichtung (14) als vollständig gesonderte Einrichtung zusätzlich zu der ersten Temperiervorrichtung (6) ausgebildet und angeordnet ist.

6. Temperierkanal (1) nach mindestens einem der Ansprüche 1 bis 5, **dadurch gekennzeichnet, dass** die zweite Temperiereinrichtung (14) als tunnelartige Kammer ausgebildet ist, durch die das Rücktrumm (12) des Transportbands (5) hindurchgeführt ist.

7. Temperierkanal (1) nach mindestens einem der Ansprüche 1 bis 6, **dadurch gekennzeichnet, dass** die zweite Temperiereinrichtung (14) ein Gebläse für temperierte Luft aufweist.

8. Temperierkanal (1) nach mindestens einem der Ansprüche 1 bis 7, **dadurch gekennzeichnet, dass**
die Temperatur des Transportbands (5) an der Übernahmestelle (8) eine auf die temperatunnäßige Beeinflussung der Süßwarenstücke (4) abgestimmte optimale Temperatur ist, und/oder
der Temperierkanal (1) als ein einer Überziehmaschine (13) für Schokolademasse nachgeschalteter Kühlkanal ausgebildet ist, und/oder
das Transportband (5) aus Kunststoff ausgebildet ist.

9. Verfahren zum Betreiben eines Temperierkanals (1) für Süßwarenstücke (4), insbesondere einem Temperierkanal (1) nach mindestens einem der Ansprüche 1 bis 8, mit den Schritten:
Führen eines endlosen Transportbands (5), auf dem die Süßwarenstücke (4) aufliegen, durch einen Temperiertunnel (2), wobei die Süßwarenstücke (4) im Temperiertunnel (2) temperiert werden, wobei der Temperiertunnel (2) eine Übernahmestelle (8) am Transportband (5) für die ankommenden Süßwarenstücke (4) aufweist,
Messen der Temperatur des Transportbands (5) im Bereich des Rücktrumms vor der Übernahmestelle (8),
Steuern oder Regeln der Temperatur des Transportbands (5) an der Übernahmestelle (8) mittels einer Steuer- und/oder Regeleinrichtung (16) derart, dass das Rücktrumm (12) des Transportbands (5) gesondert so geheizt und/oder gekühlt wird, dass das Transportband (5) an der Übernahmestelle (8) eine auf die Süßwarenstücke (4) abgestimmte bestimmte Temperatur mit einem konstanten Wert erhält.

10. Verfahren nach Anspruch 9, **dadurch gekennzeichnet, dass** die zweite Temperiereinrichtung (14) unmittelbar auf das Rücktrumm (12) des Transportbands (5) einwirkt.

11. Verfahren nach Anspruch 9 oder 10, **dadurch gekennzeichnet, dass** die Temperatur des Transportbands (5) im Bereich des Beginns des Rücktrumms (12) und die Temperatur des Transportbands (5) an der Übernahmestelle (8) gemessen werden.

12. Verfahren nach mindestens einem der Ansprüche 9 bis 11, **dadurch gekennzeichnet, dass**
die Temperatur des Transportbands (5) an der Übernahmestelle (8) eine auf die temperaturmäßige Beeinflussung der Süßwarenstücke (4) abgestimmte optimale Temperatur ist, und/oder
der Temperierkanal (1) als ein einer Überziehmaschine (13) für Schokolademasse nachgeschalteter Kühlkanal ausgebildet ist, und/oder
das Transportband (5) aus Kunststoff ausgebildet ist.

## Claims

1. A tempering channel (1) for confectioneries (4), comprising
a tempering tunnel (2);
a first tempering apparatus (6);
an endless and driven conveyor belt (5), the conveyor belt (5) being designed to transport the confectioneries (4) being located on the conveyor belt (5) in a direction of movement (9) through the tempering tunnel (2) to temper the confectioneries (4) by the first tempering apparatus (6);
a transfer location (8) being located at the conveyor belt (5), the transfer location (8) serving for the arriving confectioneries (4); and
a second tempering apparatus (14) acting upon the lower part (12) of the conveyor belt (5), **characterised in that**
at least one sensor (15, 18, 21) for sensing the temperature of the lower part (12) of the conveyor belt (5) is provided, the sensor (15, 18, 21) being arranged upstream or downstream of the second tempering apparatus (14) and upstream of the transfer location (8); and
a control unit (16) is provided, the control unit (16) being connected to the at least one sensor (15) and to the second tempering apparatus (14) and being designed in a way that the temperature of the conveyor belt (5) at the transfer location (8) is controlled such that the conveyor belt (5) is heated and/or cooled in a way that the conveyor belt (5) at the transfer location (8) attains a specific temperature being coordinated with the influence on the confectioneries (4) with respect to temperature.

2. The tempering channel (1) of claim 1, **characterised in that** the second tempering apparatus (14) is arranged to directly act upon the lower part (12) of the conveyor belt (5).

3. The tempering channel (1) of claim 1 or 2, **characterised in that** a plurality of sensors (15, 18, 21) is provided, the sensors (15, 18, 21) serving to sense the temperature of the conveyor belt (5), the sensors (15, 18, 21) being located upstream and/or downstream of the second tempering apparatus (14) and upstream of the transfer location (8).

4. The tempering channel (1) of at least one of claims 1 to 3, **characterised in that** the second tempering apparatus (14) and the first tempering apparatus (6) acting upon the confectionaries (4) in the tempering tunnel (2) are partly designed and arranged as one common unit in the sense that the second tempering apparatus (14) is connected to the first tempering apparatus (6).

5. The tempering channel (1) of at least one of claims 1 to 4, **characterised in that** the second tempering apparatus (14) is designed and arranged to be completely separate from and in addition to the first tempering apparatus (6).

6. The tempering channel (1) of at least one of claims 1 to 5, **characterised in that** the second tempering apparatus (14) is designed as a tunnel-like chamber through which the lower part (12) of the conveyor belt (5) is guided.

7. The tempering channel (1) of at least one of claims 1 to 6, **characterised in that** the second tempering apparatus (14) includes a fan for tempered air.

8. A tempering channel (1) of at least one of claims 1 to 7, **characterised in that**
the temperature of the conveyor belt (5) at the transfer location (8) is an optimal temperature being coordinated with the influence on the temperature of the confectioneries (4), and/or
the tempering channel (1) is designed as a cooling channel being arranged downstream of a coating machine (13) for a chocolate mass, and/or
the conveyor belt (5) is made of plastic.

9. A method of operating a tempering channel (1) for confectioneries (4), especially a tempering channel (1) of at least one of claims 1 to 8, comprising the steps of
guiding an endless conveyor belt (5) through a tempering tunnel (2), the confectioneries (4) being located on the conveyor belt (5), while the confectioneries (4) are tempered in the tempering tunnel (2), the tempering tunnel (2) including a transfer location (8) at the conveyor belt (5) for the arriving confectioneries (4),
sensing the temperature of the conveyor belt (5) in the region of the lower part (12) upstream of the transfer location (8),
controlling the temperature of the conveyor belt (5) at the transfer location (8) by a control unit (16) in a way that the lower part (12) of the conveyor belt (5) is separately heated and/or cooled such that the conveyor belt (5) at the transfer location (8) attains a specific temperature of a constant value being coordinated with the confectioneries (4).

10. The method of claim 9, **characterised in that** the second tempering apparatus (14) directly acts upon the lower part (12) of the conveyor belt (5).

11. The method of claim 9 or 10, **characterised in that** the temperature of the conveyor belt (5) is sensed in the region of the beginning of the lower part (12) and the temperature of the conveyor belt (5) is sensed at the transfer location (8).

12. The method of at least one of claims 9 to 11, **characterised in that**
the temperature of the conveyor belt (5) at the transfer location (8) is an optimal temperature being coordinated with the influence on the confectioneries (4) with respect to temperature, and/or
the tempering channel (1) is designed as a cooling channel being arranged downstream of a coating machine (13) for a chocolate mass, and/or
the conveyor belt (5) is made of plastic.

## Revendications

1. Canal d'équilibrage de température (1) pour des produits de confiserie (4), comprenant
un tunnel d'équilibrage de température (2);
un premier dispositif d'équilibrage de température (6);
une bande transporteuse (5) entraînée continue, sur laquelle les produits de confiserie (4) sont guidés par le tunnel d'équilibrage de température (2), reposant dans un sens de marche de bande (9), et sont alors thermorégulés avec le premier dispositif d'équilibrage de température (6); et
un point de prise en charge (8) sur la bande transporteuse (5) pour les produits de confiserie (4) arrivants; et
un second dispositif d'équilibrage de température (14) agissant sur le brin retour (12) de la bande transporteuse (5), **caractérisé en ce que**
qu'au moins un capteur (15, 18, 21) est prévu pour la saisie de la température de la bande transporteuse (5), lequel est disposé en amont ou en aval du second dispositif d'équilibrage de température (14) et en amont du point de prise en charge (8); et
un dispositif de commande et/ou de régulation (16) est prévu, lequel est relié au au moins un capteur (15) et au dispositif d'équilibrage de température (14) et est conçu de telle sorte que la température de la bande transporteuse (5) au point de prise en charge (8) est commandée ou régulée, de telle sorte que la bande transporteuse (5) est chauffée et/ou refroidie, de façon que la bande transporteuse (5) présente au point de prise en charge (8) une température définie adaptée à l'influence au niveau de la température sur les produits de confiserie (4).

2. Canal d'équilibrage de température (1) selon la revendication 1, **caractérisé en ce que** le second dispositif d'équilibrage de température (14) est disposé en agissant directement sur le brin retour (12) de la bande transporteuse (5).

3. Canal d'équilibrage de température (1) selon la revendication 1 ou 2, **caractérisé en ce qu'**une pluralité de capteurs (15, 18, 21) est prévue pour la saisie de la température de la bande transporteuse (5), lesquels sont disposés en amont et/ou en aval du second dispositif d'équilibrage de température (14) et en amont du point de prise en charge (8).

4. Canal d'équilibrage de température (1) selon au moins l'une quelconque des revendications 1 à 3, **caractérisé en ce que** le second dispositif d'équilibrage de température (14) et le premier dispositif d'équilibrage de température (6) agissant sur les produits de confiserie (4) dans le tunnel d'équilibrage de température (2) sont conçus et disposés en partie comme un dispositif commun en ce sens que le second dispositif d'équilibrage de température (14) est raccordé au premier dispositif d'équilibrage de température (6).

5. Canal d'équilibrage de température (1) selon au moins l'une quelconque des revendications 1 à 4, **caractérisé en ce que** le second dispositif d'équilibrage de température (14) est conçu et disposé en tant que dispositif complètement séparé en supplément du premier dispositif d'équilibrage de température (6).

6. Canal d'équilibrage de température (1) selon au moins l'une quelconque des revendications 1 à 5, **caractérisé en ce que** le second dispositif d'équilibrage de température (14) est conçu comme chambre en forme de tunnel, à travers laquelle le brin retour (12) de la bande transporteuse (5) est guidé.

7. Canal d'équilibrage de température (1) selon au moins l'une quelconque des revendications 1 à 6, **caractérisé en ce que** le second dispositif d'équilibrage de température (14) présente une soufflerie pour l'air thermorégulé.

8. Canal d'équilibrage de température (1) selon au moins l'une quelconque des revendications 1 à 7, **caractérisé en ce que**
la température de la bande transporteuse (5) au point de prise en charge (8) est une température optimale adaptée à l'influence au niveau de la température sur les produits de confiserie (4), et/ou
le canal d'équilibrage de température (1) est conçu comme un canal réfrigérant placé en aval d'une machine d'enrobage (13) pour de la pâte de chocolat, et/ou
la bande transporteuse (5) est conçue à base de matière synthétique.

9. Procédé pour faire fonctionner un canal d'équilibrage de température (1) pour des produits de confiserie (4), en particulier un canal d'équilibrage de température (1) selon au moins l'une quelconque des revendications 1 à 8, comprenant les étapes suivantes :
guidage d'une bande transporteuse (5) continue, sur laquelle les produits de confiserie (4) reposent, par un tunnel d'équilibrage de température (2), les produits de confiserie (4) étant thermorégulés dans le tunnel d'équilibrage de température (2), le tunnel d'équilibrage de température (2) présentant un point de prise en charge (8) sur la bande transporteuse (5) pour les produits de confiserie (4) arrivants,
mesure de la température de la bande transporteuse (5) dans la zone du brin retour avant le point de prise en charge (8),
commande ou régulation de la température de la bande transporteuse (5) au point de prise en charge (8) au moyen d'un dispositif de commande et/ou de régulation (16), de telle sorte que le brin retour (12) de la bande transporteuse (5) est chauffé et/ou refroidi séparément, de façon que la bande transporteuse (5) conserve au point de prise en charge (8) une température déterminée et adaptée aux produits de confiserie (4) avec une valeur constante.

10. Procédé selon la revendication 9, **caractérisé en ce que** le second dispositif d'équilibrage de température (14) agit directement sur le brin retour (12) de la bande transporteuse (5).

11. Procédé selon la revendication 9 ou 10, **caractérisé en ce que** la température de la bande transporteuse (5) est mesurée dans la zone du début du brin retour (12) et la température de la bande transporteuse (5) est mesurée au point de prise en charge (8).

12. Procédé selon au moins l'une quelconque des revendications 9 à 11, **caractérisé en ce que**
la température de la bande transporteuse (5) au point de prise en charge (8) est une température optimale adaptée à l'influence au niveau de la température sur les produits de confiserie (4), et/ou
le canal d'équilibrage de température (1) est conçu comme un canal de refroidissement placé en aval d'une machine d'enrobage (13) pour de la pâte de chocolat, et/ou
la bande transporteuse (5) est conçue à base de matière synthétique.
